# EUROPEAN PATENT APPLICATION

(11) **EP 2 693 686 A1**
(43) Date of publication of application: **05.02.2014**
(21) Application number: 12184799.0
(22) Date of filing: 18.09.2012
(51) Int. Cl.: H04L 9/32

(54) **Cryptographic group signature methods and devices**

(30) Priority: 03.08.2012 EP 12305967
(71) Applicant: Thomson Licensing, 92130 Issy-les-Moulineaux (FR)
(72) Inventor: El Aimani, Laila, 92443 Issy-les-Moulineaux (FR); Sanders, Olivier, 92443 Issy-les-Moulineaux (FR)
(74) Representative: Ståhl, Björn Niclas

(57) **Abstract**

A processor (111) of a device (110) having a public/private key pair comprising a private key skᵢ and a corresponding public key vkᵢ generates a group signature µ on a plaintext m by: randomizing at least part of a certificate σ_{cert} for the public/private key pair to obtain at least a randomized part r'_{cert} of the certificate σ_{cert}; obtaining a one-time signature key pair (skₒₜₛ,vkₒₜₛ); generating, using the private key skᵢ, a first signature σ₁ on the message m, the public one-time signature key vkₒₜₛ and at least the randomized part r'_{cert} of the certificate σ_{cert}; generating a non-interactive zero-knowledge proof P that at least the randomized part r'_{cert} is at least part of a valid signature for the public/private key pair; generating a second signature σₒₜₛ, using the private one-time signature key vkₒₜₛ, the first signature σ₁ and the plaintext m; and outputting the group signature µ comprising at least the randomized part r'_{cert} of the certificate σ_{cert}, the public one-time signature key vkₒₜₛ, the first signature σ₁, the non-interactive zero-knowledge proof P, and the second signature σₒₜₛ. Also provided is a device and a method for verifying generated group signatures

## Description

### TECHNICAL FIELD

The present invention relates generally to cryptography, and in particular to group signatures.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Group signatures, introduced at EUROCRYPT 1991 by David Chaum and Eugène van Heyst in "Group Signatures", allow members of a group to sign messages anonymously on behalf of the whole group. The group is controlled by a group manager who handles the enrolment of the group members, and who has the ability to open a group signature generated by a member of its group in order to determine who generated this group signature.

Group signatures are useful in contexts where it is desirable to preserve the signer's anonymity with the possibility to retrieve, by some authority, the signer's identity, for example in case of abuse. An illustrative example are employees equipped with badges that open the doors to certain protected areas. The badges use group signatures to prove the right to enter the protected areas, but a log of entries does not show who entered at what time (as legal reasons may preclude this). However, it should still be possible, e.g. in case of theft, to find out the identity of a signing group member.

The rest of this section is organized as follows. First, a formal definition of a group signature scheme along with the popular security notions it should meet are provided. Then come descriptions of blocks and notions that will be used throughout the document, namely: Non-interactive zero knowledge proofs, digital (one-time) signatures, and the random oracle model (ROM) idealization.

In a group signature scheme, a group of users, each user usually identified by a unique index *i*, are able to produce signatures on behalf of the group. Users interact with a certification authority and a group manager to join the group, and thus obtains a signature key pair and a certificate that effectively marks the user's membership in the group. Moreover, the group manager obtains information that allows opening the group signatures and identification of their issuers.

More formally, a group signature scheme normally comprises the following algorithms/protocols:
- **Join.** Adds a new user to the group. Comprises a first interactive protocol between the user and the certification authority, and a second interactive protocol between the user and the group manager.
   The first protocol provides User *i* with a key pair (sk*ᵢ*,vk*ᵢ*) and a certificate cert*ᵢ* on the key pair, marking its membership to the group. The second protocol provides information to the group manager, enabling opening group signatures issued by User *i*.
- **Sign.** Inputs a message *m*, a user's private key and certificate on the private key (or a certificate on the corresponding public key) and outputs a group signature µ on *m*.
- **Verify.** Inputs a message *m* and a group signature µ and outputs 1 if µ is a valid group signature on *m*, and 0 otherwise.
- **Open.** Inputs a message *m*, a group signature µ and the group manager's private data (the information obtained during Join). If µ is a valid group signature on *m* with respect to the key pair of User *i*, Open returns *i* and a proof *p* proving the correctness of this opening, i.e. that User *i* has indeed produced the group signature µ. Otherwise (if µ is an invalid group signature), 0 is output.
- **Judge.** Inputs a message *m*, a group signature µ, an identity *i* and a proof *p*, and returns 1 if *p* correctly proves that user *i* produced the group signature µ.

Among the different notions a group signature scheme can be designed to meet, the most popular are:
- **Anonymity.** Group signatures do not reveal the signer's identity. Chosen-Ciphertex Attack (CCA) anonymity is defined through a game between a challenger and an adversary in which the latter is required to find the issuer of a group signature among a set of two challenge identities. During the game the adversary may have access to an opening oracle that he can query on any group signature except on the challenge. Chosen-Plaintext Attack (CPA) anonymity corresponds to a game in which the adversary is not allowed to issue any opening queries; CCA anonymity is obviously stronger than CPA anonymity. Anonymity is acheived in these games if the adversary is unable to find the issuer.
- **Non-frameability.** The difficulty to accuse falsely, by a cheating group manager, an honest group member of having issued a group signature on a message.

### Non-interactive zero-knowledge (NIZK) proofs

If R is a relation that can be verified in polynomial time, i.e. given public parameters gk, an instance x, and a witness w, a NIZK proof makes it possible to check efficiently, using the public parameters gk, whether or not the pair (x,w) satisfies the relation R.

The present invention uses non-interactive proof systems, for polynomially verifiable relations R, that comprise four algorithms: a setup algorithm, a common reference string *crs* generation algorithm, a prover algorithm and a verifier algorithm. The setup algorithm outputs (gk,ek) where gk denotes the public parameters, and ek is the secret extraction key, although ek may be an empty string (i.e the protocol is built without knowledge of any trapdoors). The *crs* generation algorithm takes (gk,ek) as input and produces a common reference string τ. The prover algorithm takes as input (gk,τ,*x*,*w*) and produces a proof P that (*x,w*) belongs to R. The verifier algorithm takes as input (gk,τ,*x*,P) and outputs 1 if the proof P is valid and 0 otherwise.

The proof is zero-knowledge (ZK) if the verifier (who does not know the secret extraction key ek) does not learn anything from the prover aside from the validity of the proven statement.

Efficient non-interactive zero-knowledge proofs for algebraic relations involving elements in groups equipped with a bilinear map e may for example be found in Jens Groth and Amit Sahai, "Efficient Non-Interactive Proof Systems for Bilinear Groups", EUROCRYPT 2008.

### Digital signature schemes

In the art, there are many suitable digital signature schemes that comprise a key generation algorithm, a signing algorithm and a verification algorithm.

The security of digital signature schemes captures the difficulty of, given access to a signing oracle, producing a valid pair of message and corresponding signature such that the message has not been queried to the signing oracle.

### One-time signatures (OTS)

One-time digital signature schemes, also well known in the art, can be used to sign, at most, one message; otherwise, signatures can be forged. A new public key is required for each message that is signed. These schemes are, similar to 'normal' digital signatures, defined by a key generation algorithm, a signing algorithm, and a verification algorithm.

The security of one-time signature schemes captures the difficulty, given a public key and a signing oracle that can be queried at most once, to come up with a valid new pair of message and corresponding signature.

### Random Oracle Model (ROM) vs. Standard Model

In cryptography, random oracles are typically used to model cryptographic hash functions in schemes where strong randomness assumptions are needed of the hash function's output. The ROM idealizes the behavior of these hash functions, assuming that they respond to each query with a truly random element (that is always the same for a given query) from the output domain. However the ROM has been the subject of much criticism; e.g. in "The Random Oracle Methodology" (In STOC, pp. 209-218, 1998), Ran Canetti, Oded Goldreich and Shai Halevi demonstrated the existence of an insecure signature scheme that is proven secure in the ROM.

The standard model is a model of computation in which the adversary is only limited by the amount of time and computational power. It is common practice to prefer cryptographic schemes that are secure in the standard model since idealized models such as the ROM modify the adversary's computations in a way that cannot be justified in practice. However, there is often a consequent gap in terms of efficiency, in favour to the ROM, between the ROM and the standard model.

Since their introduction in 1991, most practical group signature schemes that have been proposed are proven secure in the ROM. Indeed, despite its inherent flaws, the ROM compares much better than the standard model with respect to efficiency. An example is the group signature, secure in the ROM, proposed by P. Bischel, J. Camenisch, G. Neven, N.P.Smart, and B. Warinschi in "Get Shorty via Group Signatures Without Encryption" (SCN 2010), which achieves, using a group size of 256-bits, a group signature size of 0.15kB, versus the proposal, secure in the Standard Model, proposed at Asiacrypt 2007 by Jens Groth in "Fully Anonymous Group Signatures Without Random Oracles", where the group signatures size grows to 1.5 kB.

An attempt to improve the efficiency in the Standard Model has been made by Giuseppe Ateniese, Jan Camenisch, Susan Hohenberger and Breno de Medeiros in "Practical Group Signatures without Random Oracles", (Cryptology ePrint Archive, 2005). However, the construction suffers several flaws in addition to the unpopular (and strong) security assumptions it relies on. First, the group signatures are partially randomizable (i.e. given a valid signature, anyone is able to produce a different valid signature) and thus cannot reach the non-frameability property, requiring that no user can be falsely accused of having produced a signature, or the standard CCA-anonymity, requiring that no adversary is able to identify the issuer of a group signature, even when allowed to open any other signature. Finally, the Join algorithm is not clearly explained; it requires, for the underlying digital signature scheme used to issue certificates, a protocol to sign a committed value, but it uses a variant of the Camenisch-Lysyanskaya's signature [see "Signature Schemes and Anonymous Credentials from Bilinear Maps" at CRYPTO 2004] that signs messages in the clear (rather than hidden in commitments).

It will be appreciated that there is a need to bridge the gap, in particular when it comes to the size of the group signature, between the ROM and the Standard Model while, contrary to Aniese et al., working with well-studied and popular assumptions. It will further be appreciated that in Groth's scheme, to ensure anonymity, the issuer has to encrypt (in the CCA-secure version) or to commit to (in the CPA-secure version) the digital signature created by the group member; this increases the size of the resulting group signature and the cost of its algorithms.

The present invention provides a solution that improves upon the prior art in that it overcomes at least some of these disadvantages.

### SUMMARY OF INVENTION

In a first aspect, the invention is directed to a method of generating a group signature on a plaintext. A processor of a device having a certified public/private key pair comprising a private key and a corresponding public key: generates, using a signature function and the private key, a first signature on at least a random value; binds, using a deterministic process taking as input at least the random value, the first signature and the message to the resulting group signature, the binding resulting in a binding value; and outputs the group signature comprising at least part of a certificate on the public/private key pair, the first signature, the random value and the binding value.

In a first preferred embodiment, the group signature further comprises a proof that at least part of a certificate on the public/private key pair is part of a valid certificate on the public/private key pair.

In a second preferred embodiment, the at least part of a certificate on the public/private key pair is the entire certificate on the public/private key pair.

In a third preferred embodiment, the at least part of a certificate on the public/private key pair has been masked.

In a second aspect, the invention is directed to a device for generating a group signature on a plaintext, the device having a public/private key pair comprising a private key and a corresponding public key. The device comprises a processor configured to: generate, using a signature function and the private key, a first signature on at least a random value; bind, using a deterministic process taking as input at least the random value, the first signature and the message to the resulting group signature, to obtain a binding value; and output the group signature comprising at least part of a certificate on the public/private key pair, the first signature, the random value and the binding value.

In a first preferred embodiment, the group signature further comprises a proof that at least part of a certificate on the public/private key pair is part of a valid certificate on the public/private key pair.

In a second preferred embodiment, the at least part of a certificate on the public/private key pair is the entire certificate on the public/private key pair.

In a third preferred embodiment, the at least part of a certificate on the public/private key pair has been masked.

In a third aspect, the invention is directed to a method for veryfing a group signature. A device comprising a processor receives a group signature comprising at least part of a certificate, a first signature, a random value and a binding value; checks that the binding value is correctly produced, using a predetermined deterministic process on input at least the random value, the first signature and the certificate; checks that the certificate is at least part of a valid certificate on the key used to obtain the first signature; and outputs that the group signature is successfully verified in case both checks are successful.

In a first preferred embodiment, the group signature further comprises a proof that at least part of a certificate on the public/private key pair is part of a valid certificate on the public/private key pair and the checking that the certificate is at least part of a valid certificate on the key used to obtain the first signature is done by verifying the proof.

In a second preferred embodiment, the at least part of a certificate on the public/private key pair is the entire certificate on the public/private key pair.

In a fourth aspect, the invention is directed to a device for veryfing a group signature. The device comprises a processor configured to: receive a group signature comprising at least part of a certificate, a first signature, a random value and a binding value; check that the binding value is correctly produced, using a predetermined deterministic process on input at least the random value, the first signature and the certificate; check that the certificate is at least part of a valid certificate on the key used to obtain the first signature; and output that the group signature is successfully verified in case both checks are successful.

In a first preferred embodiment, the group signature further comprises a proof that at least part of a certificate on the public/private key pair is part of a valid certificate on the public/private key pair and the processor is configured to check that the certificate is at least part of a valid certificate on the key used to obtain the first signature is done by verifying the proof.

In a fifth aspect, the invention is directed to a computer program product having stored thereon instructions that, when executed by a processor, perform the method of the first aspect.

In a sixth aspect, the invention is directed to a computer program product having stored thereon instructions that, when executed by a processor, perform the method of the second aspect.

### BRIEF DESCRIPTION OF DRAWINGS

Preferred features of the present invention will now be described, by way of non-limiting example, with reference to the accompanying drawings, in which:

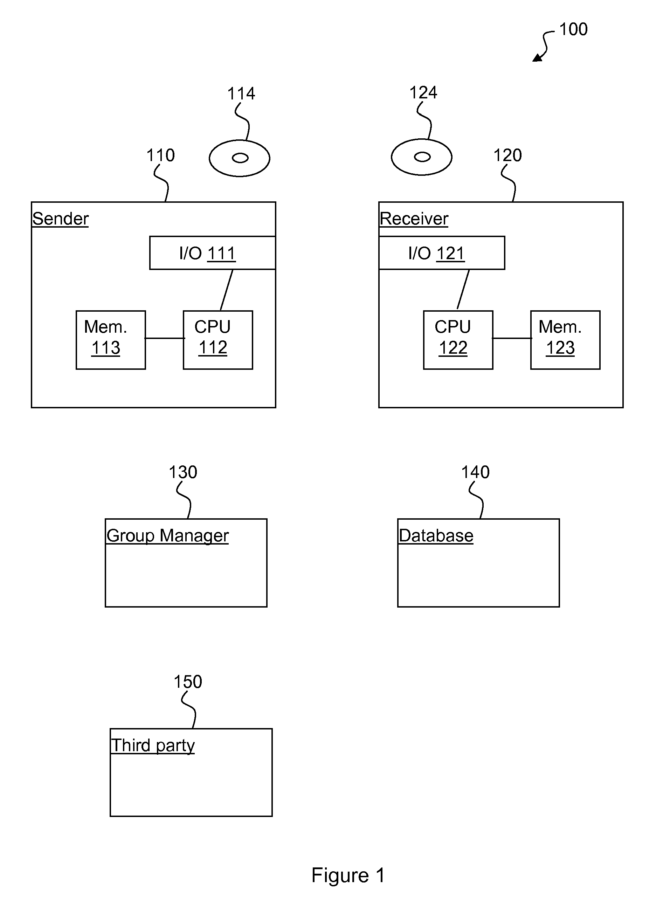

Figure 1 illustrates a group signature system according to a preferred embodiment of the invention.

### DESCRIPTION OF EMBODIMENTS

The present invention is directed to a group signature scheme that is secure in the standard model.

A main inventive idea is to use an appropriate digital signature scheme to authenticate information related to the group signature that the group member will issue, but that does not reveal any information about the signer if the public verification key is not provided. However, contrary to the solution provided by Groth, the invention uses neither encryption nor commitment of the signature, which considerably alleviates the size of the group signature and the number of pairing evaluations or exponentiations required for the Sign and Verify algorithms.

It is assumed that each user joining the group generates a key pair for a digital signature scheme and receives a certificate on the key pair, proving the user's membership to the group. To produce a group signature on a message *m*, a user randomizes its certificate σ*_{cert}* to obtain a randomized certificate σ'*_{cert}*, generates a key pair (skₒₜₛ,vkₒₜₛ) for a strong one-time signature and signs, using its certified key, the one-time signature verification key vkₒₜₛ (possibly concatenated with *m* or σ'*_{cert}*), thus producing a digital signature σ₁. The user then provides elements (for instance a non-interactive zero-knowledge proof) to prove that σ₁ was produced using the key certified in the randomized σ'*_{cert}* (or its corresponding private key), and finally signs, using the strong one-time signature scheme, some elements of the signature (and *m* if it was not signed before) to prevent a third party from randomizing the signature.

Put another way, a first signature is generated, using a signature function and a the certified private key, over at least a random value (vkₒₜₛ). Then the random value, the message *m*, and the first signature are bound, using a deterministic process (advantageously a signature function), resulting in a binding value. The group signature comprises at least a randomized part of the certificate (which can also be a certificate), the first signature, the random value and the binding value, but the group signature can also comprise at least one element proving that the randomized part of the certificate is part of a valid signature/certificate on the key used to issue the first signature. Verification of a group signature generated this way is performed by checking that the binding value is correctly produced, using a predetermined deterministic process on input at least the random value, the first signature and the certificate; checking that the certificate is at least part of a valid certificate on the key used to obtain the first signature; and outputting that the group signature is successfully verified in case both checks are successful.

In other terms, using appropriate instantiations, the present scheme does not require concealing (using encryption or commitment) the signature σ₁ on the key of the one-time signature, but still achieves all (strong) security properties required for group signatures while reducing the size and cost of the group signature.

### First preferred embodiment

### Building blocks

**Signature or certification schemes.** The first embodiment uses two digital signature schemes Σ_{cert} and Σ₁. It is required that Σ_{cert} is re-randomizable, which means that anyone is able to generate a new signature on the a message, given a valid signature on the same message. It is also required that this signature scheme admits a protocol for signing committed values. Both conditions are fulfilled by variant C of Camenisch-Lysyanskaya's signatures [see "Signature Schemes and Anonymous Credentials from Bilinear Maps". CRYPTO 2004]. Variant A of Camenisch-Lysyanskaya's signatures is used for Σ₁ that should be secure (see Digital signature schemes herein). It will be appreciated that it is advantageous to use signature schemes that allow an efficient performance of the proofs.

**One-time signature schemes.** The one-time signatures should be secure (see One-time signatures (OTS) herein). The first embodiment uses a secure one-time signature Σₒₜₛ. Several suitable schemes exist in the prior art, for example the Boneh-Boyen signature scheme [see Dan Boneh and Xavier Boyen: "Short Signatures Without Random Oracles". EUROCRYPT 2004: 56-73].

### Construction

1. **Keygen.** For a security parameter *k*, the certificate issuer (possibly the group manager) invokes Σ_{cert}.keygen to obtain (sk_{cert},pk_{cert}). The parameters of the non-interactive proofs system are set up by a trusted party such as a certification authority (e.g. Verisign). The security parameter *k* denotes that no adversary is able to successfully attack the scheme with less than 2*^{k}* operations. For example, when using 256-bit group sizes, a security of 128 bits is achieved; i.e. no adversary can attack the scheme successfully with less than 2¹²⁸ operations.
2. **Join.** A new user *i* generates a key pair (skᵢ,vkᵢ) using Σ₁.keygen, commits to skᵢ using, for exemple, a Pedersen Commitment (see "Non-Interactive and Information-Theoretic Secure Verifiable Secret Sharing" in CRYPTO 1991) and obtains signatures on committed values to obtain a certificate σ*_{cert}* on skᵢ. The new user then sends vkᵢ to the group manager, who records it in its private register, and proves, using an interactive or non-interactive proof of knowledge that it corresponds to skᵢ.
3. **Sign(m).** To sign a message *m*, user *i* first re-randomizes its certificate σ*_{cert}* to obtain a randomized certificate σ'*_{cert}*, and generates (skₒₜₛ,vkₒₜₛ) using Σₒₜₛ.keygen. The user then signs the concatenation of vkₒₜₛ, *m* and σ'*_{cert}*, using Σ₁.signₛₖᵢ to produce σ₁, and provides a non-interactive zero-knowledge proof P that σ'*_{cert}* is a valid signature on skᵢ. Finally the user signs σ*₁* and P using Σₒₜₛ.sign_{sk_ots}, thus generating σ*ₒₜₛ*. The group signature µ on *m* is then (σ'*_{cert}*, vkₒₜₛ, σ₁, P, σ*ₒₜₛ*).
4. **Verify**(m,µ).
   a. Check if σ*ₒₜₛ* is a valid signature with regard to vkₒₜₛ.
   b. Check the proof P, i.e. check if σ'*_{cert}* is a valid certificate on a key skᵢ and if σ₁ is a valid signature with regard to skᵢ.
   If both verifications are correct return true; else return false.
5. **Ope**n(m,µ). First, the group manager runs the **Verify** algorithm on (m,µ). If the group signature is valid then the group manager checks, for each verification key vkᵢ in its secret register, if σ₁ is a valid signature with regard to vkᵢ until a match is obtained. The group manager will then return the matching identity *i* and a non-interactive zero-knowledge proof P' that user *i* produced the signature µ on m. Else "fail" is returned.
6. **Judge**(m,µ,*i*,P'). Checks the proof P', i.e. checks if user *i* really produced the group signature µ on m. This is done using a non-interactive zero-knowledge proof.

The group signature resulting from the first embodiment comprises 22 group elements and is only 0.7 kB big, compared to 50 group elements and 1.5 kB for Groth's scheme using 256-bit group sizes. Moreover, the algorithm Verify requires the computation of 73 pairings, compared to 246 pairings for Groth's scheme.

### Second preferred embodiment

The first embodiment requires a trusted party to set up some parameters of the group signature scheme. Further, the algorithm Open has a cost that is linearly proportionate to the number of users. The second preferred embodiment overcomes these two problems at the cost of a slight increase in the size of the group signature. The second embodiment allows the group manager to set up the parameters of the group signature scheme and remains secure even if the group manager is corrupted. The group manager possesses the extraction key allowing extraction of all the secrets underlying the proofs that the group members issue. However, since none of these proofs involves sensitive information such as the group members' private keys, a dishonest group manager cannot abuse of his knowledge of the extraction key to, for instance, accuse falsely the group members of having issued signatures.

### Building blocks.

The second embodiment uses the same building blocks as the first embodiment, with the exception of Σ_{cert}, which in the second embodiment is a signature scheme that signs group elements. A suitable signature scheme is a structure-preserving signature scheme, i.e. a scheme where the verification key, messages, and signatures are group elements, and where the verification algorithm consists of a predicate of pairing equation verifications. A signature scheme with these properties has been provided by Masayuki Abe, Georg Fuchsbauer, Jens Groth, Kristiyan Haralambiev and Miyako Ohkubo in "Structure-Preserving Signatures and Commitments to Group Elements", CRYPTO 2010: 209-236.

### Construction

1. **Keygen.** For a security parameter *k*, the group manager invokes Σ_{cert}.keygen to get (sk_{cert},pk_{cert}). The parameters of the non-interactive proofs system are set up by the group manager who also acquires the extraction key ek.
2. **Join.** The new user *i* generates a key pair (skᵢ,vkᵢ) using Σ₁.keygen, and sends vkᵢ to the group manager to get a certificate σ*_{cert}* on it. The group manager then registers vkᵢ in his secret record.
3. **Sign(m).** To sign a message *m*, a user *i* first re-randomizes a randomizable part r_{cert} of its certificate σ*_{cert}* (r_{cert} may be equal to σ*_{cert}*) to obtain a randomized part r'_{cert} of a signature on vkᵢ, and generates (skₒₜₛ,vkₒₜₛ) using Σₒₜₛ.keygen. The user then signs the concatenation of vkₒₜₛ, *m* and r'*_{cert},* using Σ₁.signₛₖᵢ to produce σ₁ and provides a non-interactive zero-knowledge proof P that r'*_{cert}* is a randomizable part of a valid signature on vkᵢ. Finally, the user signs, using Σₒₜₛ.sign_{sk_ots}, σ₁ and P, thus generating a resulting signature σ*ₒₜₛ*. The group signature µ on *m* is then (r'*_{cert}*, vkₒₜₛ, σ*₁*, P, σ*ₒₜₛ*).
4. **Verify**(m,µ).
   a. Check if σ*ₒₜₛ* is a valid signature with regard to vkₒₜₛ.
   b. Check the proof P, i.e. check if r'*_{cert}* is a valid certificate on a key vkᵢ and if σ*₁* is a valid signature with regard to vkᵢ.
   If both verifications are correct return true; else return false.
5. **Open**(m,µ,ek).
   First, the group manager runs the **Verify** algorithm on (m,p). If the group signature is valid then the group manager uses its extraction key ek on the proof P to extract the verification key vk. The group manager then searches vk in its secret record and returns the matching identity *i* and a non-interactive zero-knowledge proof P' that user *i* produced the signature µ on m. Else "fail" is returned.
6. **Judge**(m,µ,*i*,P').
   Checks the proof P', i.e. checks if user *i* really produced the group signature µ on m.

The group signature resulting from the second embodiment comprises 28 group elements and is only 0.9 kB big, compared to 22 group elements and 0.7 kB for the first embodiment and 50 group elements and 1.5 kB for Groth's scheme using the same group sizes of 256-bit. Moreover, the algorithm **Verify** requires the computation of 124 pairings, compared to 246 pairings for Groth's scheme.

In both the first and the second preferred embodiments, it is, as previously mentioned, also possible to sign the message *m* and the randomized certificate σ'*_{cert}* or the randomized part r'*_{cert}* of a signature in the second signature σ*ₒₜₛ* instead of (or in addition to) the first signature σ₁. It will be appreciated that it is not necessary to sign the message *m* and the randomized certificate σ'*_{cert}* or the randomized part r'*_{cert}* of a signature in the same signature.

Figure 1 illustrates a group signature system 100 according to a preferred embodiment of the present invention. For ease of illustration and comprehension, the connections between the devices in the system have been omitted.

The system 100 comprises a sender 110 and a receiver 120, each comprising at least one interface unit 111, 121 configured for communication with the other device, at least one processor ("processor") 112, 122 and at least one memory 113, 123 configured for storing data, such as accumulators and intermediary calculation results. The system 100 further comprises a Group Manager 130, a database 140 and a third party 150; although not illustrated for the sake of clarity, each of these devices comprises the necessary hardware such as processors and memory.

The processor 112 of the sender 110 is configured to partake in the Join and perform the Sign parts of the present group signature scheme, and the processor 122 of the receiver 120 is adapted to verify a received group signature, i.e. perform Verify. The Group manager 130 is configured to partake in the Join part and thereby store data in the database 140 ("secret record"), and to perform the Open part. The third party 150 is configured to verify proofs, i.e. to perform the Judge part. A first computer program product 114 such as a CD-ROM or a DVD comprises stored instructions that, when executed by the processor 112 of the sender 110, partakes in the Join and performs the Sign parts according to the invention. A second computer program product 124 comprises stored instructions that, when executed by the processor 122 of the receiver 120, performs Verify according to the invention.

It will thus be appreciated that the present invention provides a group signature scheme that is secure in the Standard Model, while its resulting group signatures are smaller than in prior art (Standard Model) solutions.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of generating a group signature (µ) on a plaintext (*m*), the method comprising the steps in a processor (111) of a device (110) having a certified public/private key pair comprising a private key (skᵢ) and a corresponding public key (vkᵢ), of:
- generating, using a signature function (Σ₁) and the private key (skᵢ), a first signature (σ₁) on at least a random value (r);
- binding, using a deterministic process taking as input at least the random value (r), the first signature (σ₁) and the message (*m*) to the resulting group signature (µ), the binding resulting in a binding value (σₒₜₛ); and
- outputting the group signature (µ) comprising at least part of a certificate (r_cert) on the public/private key pair (skᵢ, vkᵢ), the first signature (σ₁), the random value (r) and the binding value (σₒₜₛ).

2. The method of claim 1, wherein the group signature further comprises a proof that at least part of a certificate (r_cert) on the public/private key pair (skᵢ, vkᵢ) is part of a valid certificate on the public/private key pair (skᵢ, vkᵢ).

3. The method of claim 1, wherein the at least part of a certificate (r_cert) on the public/private key pair (skᵢ, vkᵢ) is the entire certificate on the public/private key pair (skᵢ, vkᵢ).

4. The method of claim 1, wherein the at least part of a certificate (r_cert) on the public/private key pair (skᵢ, vkᵢ) has been masked.

5. A device (110) for generating a group signature (µ) on a plaintext (*m*), the device having a public/private key pair comprising a private key (skᵢ) and a corresponding public key (vkᵢ), the device comprising a processor (111) configured to:
- generate, using a signature function (Σ₁) and the private key (skᵢ), a first signature (σ₁) on at least a random value (r);
- bind, using a deterministic process taking as input at least the random value (r), the first signature (σ₁) and the message (*m*) to the resulting group signature (µ), to obtain a binding value (σₒₜₛ); and
- output the group signature (µ) comprising at least part of a certificate (r_cert) on the public/private key pair (skᵢ, vkᵢ), the first signature (σ₁), the random value (r) and the binding value (σₒₜₛ).

6. The device of claim 5, wherein the group signature further comprises a proof that at least part of a certificate (r_cert) on the public/private key pair (skᵢ, vkᵢ) is part of a valid certificate on the public/private key pair (skᵢ, vkᵢ).

7. The device of claim 5, wherein the at least part of a certificate (r_cert) on the public/private key pair (skᵢ, vkᵢ) is the entire certificate on the public/private key pair (skᵢ, vkᵢ).

8. The device of claim 5, wherein the at least part of a certificate (r_cert) on the public/private key pair (skᵢ, vkᵢ) has been masked.

9. A method for veryfing a group signature, the method comprising the steps, in a device (120) comprising a processor (121), of:
- receiving a group signature (µ) comprising at least part of a certificate (r_cert), a first signature (σ₁), a random value (r) and a binding value (σₒₜₛ);
- checking that the binding value (σₒₜₛ) is correctly produced, using a predetermined deterministic process on input at least the random value (r), the first signature (σ₁) and the certificate (r_cert);
- checking that the certificate (r_cert) is at least part of a valid certificate on the key used to obtain the first signature (σ₁); and
- outputting that the group signature is successfully verified in case both checks are successful.

10. The method of claim 9, wherein the group signature further comprises a proof that at least part of a certificate (r_cert) on the public/private key pair (skᵢ, vkᵢ) is part of a valid certificate on the public/private key pair (skᵢ, vkᵢ) and wherein the checking that the certificate (r_cert) is at least part of a valid certificate on the key used to obtain the first signature (σ₁) is done by verifying the proof.

11. The method of claim 9, wherein the at least part of a certificate (r_cert) on the public/private key pair (skᵢ, vkᵢ) is the entire certificate on the public/private key pair (skᵢ, vkᵢ).

12. A device (120) for veryfing a group signature, the device (120) comprising a processor (121) configured to:
- receive a group signature (µ) comprising at least part of a certificate (r_cert), a first signature (σ₁), a random value (r) and a binding value (σₒₜₛ);
- check that the binding value (σₒₜₛ) is correctly produced, using a predetermined deterministic process on input at least the random value (r), the first signature (σ₁) and the certificate (r_cert);
- check that the certificate (r_cert) is at least part of a valid certificate on the key used to obtain the first signature (σ₁); and
- output that the group signature is successfully verified in case both checks are successful.

13. The device of claim 12, wherein the group signature further comprises a proof that at least part of a certificate (r_cert) on the public/private key pair (skᵢ, vkᵢ) is part of a valid certificate on the public/private key pair (skᵢ, vkᵢ) and wherein the processor is configured to check that the certificate (r_cert) is at least part of a valid certificate on the key used to obtain the first signature (σ₁) is done by verifying the proof.

14. A computer program product (114) having stored thereon instructions that, when executed by a processor, perform the method of any one of claims 1 to 4.

15. A computer program product (124) having stored thereon instructions that, when executed by a processor, perform the method of any one of claims 9 to 11.
